# EUROPEAN PATENT APPLICATION

(11) **EP 1 905 664 A2**
(43) Date of publication of application: **02.04.2008**
(21) Application number: 07013624.7
(22) Date of filing: 11.07.2007
(51) Int. Cl.: B62D 1/181

(54) **Electrically adjustable telescopic steering apparatus**

(30) Priority: 29.09.2006 JP 2006269357
(71) Applicant: NSK Ltd., Shinagawa-ku Tokyo (JP)
(72) Inventor: Sekii, Yoshiyuki, Maebashi-shi Gunma 371-8528 (JP); Chikaraishi, Kazuo, Maebashi-shi Gunma 371-8528 (JP); Tatewaki, Osamu, Maebashi-shi Gunma 371-8528 (JP)
(74) Representative: Grünecker, Kinkeldey, Stockmair & Schwanhäusser Anwaltssozietät

(57) **Abstract**

A telescopic adjusting steering apparatus has a steering column (12) having an outer column (12a) and an inner column (12b) connected so as to be relatively extended and contracted, and rotatably supporting a steering shaft attaching a steering wheel (13) thereto; and an electric actuator (50) having one end portion attached to the outer column (12a) and the other end portion attached to the inner column (12b), and extending and contracting the outer column (12a) and the inner column (12b); wherein the electric actuator (50) has a rotation obstructing member (59) for obstructing relative rotation of the outer column (12a) and the inner column (12b).

## Description

### BACKGROUND OF THE INVENTION

### 1. Field of the Invention

The present invention relates to a telescopic adjusting electric power steering apparatus which has a steering column having an outer column and an inner column connected so as to be relatively extended and contracted and rotatably supporting a steering shaft attaching a steering wheel thereto, and also has an electric actuator having one end portion attached to the outer column and the other end portion attached to the inner column and extending and contracting the outer column and the inner column.

### 2. Description of Related Art

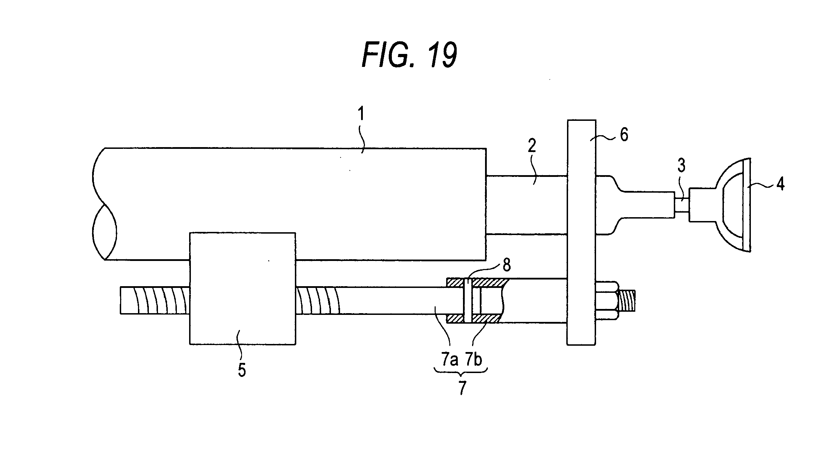

A telescopic electric power steering apparatus for operating a shaft arranged on an axis different from that of the steering column in an axial direction by a motor, and extending and contracting the column connected to the shaft is conventionally proposed. For example, a device shown in Fig. 19 is proposed as this telescopic electric power steering apparatus (see Japanese Patent Unexamined Publication JP-A-2003-276616). In this conventional example, a housing inner sleeve 2 is slidably accommodated into a housing sleeve 1, and a steering shaft 3 having a steering wheel 4 at its tip is rotatably supported in this housing inner sleeve 2. A motor 5 is attached to the housing sleeve 1, and an attaching plate 6 is attached to the housing inner sleeve 2. A connecting rod 7 is arranged between the motor 5 and the attaching plate 6. This connecting rod 7 is constructed by a shaft 7a and an outer sleeve 7b. The shaft 7a is moved in the axial direction in association with the motor 5. The outer sleeve 7b slidably fits and inserts this shaft 7a thereinto in the axial direction, and a free end is inserted into the attaching plate 6 and is fastened by a nut. At least one pin 8 passing through the shaft 7a and the outer sleeve 7b are press-fitted, and are broken and collapsed by impact force generated at a colliding time, etc.

However, in the conventional example described in the above JP-A-2003-276616, the motor 5 is fixed to the housing sleeve 1. The connecting rod 7 extended and contracted and operated by this motor 5 is constructed by the shaft 7a and the outer sleeve 7b. The shaft 7a is moved in the axial direction in association with the motor 5. The outer sleeve 7b slidably fits and inserts this shaft 7a thereinto in the axial direction, and the free end is inserted into the attaching plate 6 and is fastened by a nut. Accordingly, when relative rotating force for relatively rotating both the housing sleeve 1 and the housing inner sleeve 2 is applied between the housing sleeve 1 and the housing inner sleeve 2, an unsolved problem exists in that the connecting rod 7 is distorted in a circumferential direction, and teeth-to-teeth engagement of a speed reduction mechanism constructed by a worm gear for transmitting driving force of the motor 5 to the connecting rod is made disorder, and load of the motor required for expanding and contacting the outer/inner column is increased.

Further, there is an unsolved problem that since the connecting rod 7 is distorted, contracting load in breaking the pin 8 does not become constant, and impact energy cannot be stably absorbed.

### SUMMARY OF THE INVENTION

In view of the above, the present invention is made by noticing the unsolved problems of the above conventional example, and its object is to provide a telescopic adjusting electric power steering apparatus able to restrain the increase of load applied to the electric actuator when relative rotating force is applied to the inner column and the outer column able to be relatively rotated.

To achieve the above object, according to a first aspect of the invention, there is provided a telescopic adjusting electric power steering apparatus comprising:
a steering shaft to which a steering wheel is attached;
a steering column which rotatably supports the steering shaft, and comprises an outer column and an inner column connected each other so as to be relatively extended and contracted; and
an electric actuator which extends and contracts the outer column and the inner column, wherein
one end of the electric actuator is attached to the outer column, and the other end of the electric actuator is attached to the inner column, and
the electric actuator comprises a rotation obstructing member that obstructs relative rotation between the outer column and the inner column.

According to a second aspect of the invention, as set forth in the first aspect of the invention, it is preferable that the electric actuator comprises:
a connecting plate fixed to one of the outer column and the inner column; and
a linear motion mechanism that converts a rotational motion into a linear motion and fixed to the other of the outer column and the inner column, wherein
the linear motion mechanism comprises a rod of which one end is supported in the connecting plate, and
the rotation obstructing member comprises a rotation obstructing plate that is engaged with the rod and is fixed to the other of the outer column and the inner column.

According to a third aspect of the invention, as set forth in the second aspect of the invention, it is preferable that
the rotation obstructing plate comprises a backlash restraining mechanism that restrains a radial backlash generated between the rotation obstructing plate and the rod, and
the backlash restraining mechanism is provided in an engaging portion which engages with the rod.

According to a fourth aspect of the invention, as set forth in the third aspect of the invention, it is preferable that
the backlash restraining mechanism is arranged in the rotation obstructing plate in a direction perpendicular to a plane passing a column center line and a connecting rod center line.

According to a fifth aspect of the invention, as set forth in the first aspect of the invention, it is preferable that
the motor drives the rod so as to be advanced and retreated in an axial direction,
a contracting portion, which is capable of being contracted when impact load is transmitted, is formed between a free end of the rod and the connecting plate fixed to one of the inner column and the outer column, and
the rotation obstructing plate is engaged with an outer circumferential face of the contracting portion.

According to a sixth aspect of the invention, as set forth in the second aspect of the invention, it is preferable that
a lower end of the rod supported by the connecting plate is protruded lower side from the rotation obstructing member,
a C-ring is fixed to the lower end of the rod, and
the C-ring abuts with the rotation obstructing member so as to prevent the rod from failing off from the rotation obstructing plate.

In accordance with the present invention, the rotation obstructing member for obstructing relative rotation of the outer column and the inner column is arranged in the electric actuator for contracting the outer column and the inner column. Accordingly, the effect of obstructing the relative rotation of the outer column and the inner column by this rotation obstructing member is obtained. Further, a load increase of the motor constituting the electric actuator can be restrained.
Distortion in the contracting portion is restrained by engaging the rotation obstructing member with an outer circumferential face of the contracting portion contracted at an impact load transmitting time and formed in the connecting rod. Thus, contraction load at the impact load transmitting time can be stabilized and stable absorb impact energy can be achieved.

### BRIEF DESCRIPTION OF THE DRAWINGS

Fig. 1 is an entire constructional view showing a state in which a steering device in the present invention is mounted to a vehicle;
Fig. 2 is a side view from which a steering wheel of a steering column device is removed;
Fig. 3 is a cross-sectional view of line III-III of Fig. 2;
Fig. 4 is a cross-sectional view of line IV-IV of Fig. 3;
Fig. 5 is a longitudinal sectional view of a main portion of the steering column device;
Fig. 6 is a cross-sectional view of line VI-VI of Fig. 5;
Fig. 7 is a cross-sectional view of line VII-VII of Fig. 5;
Fig. 8 is a front view showing a modified example of a rotation preventing plate;
Fig. 9 is a front view showing another modified example of the rotation preventing plate;
Fig. 10 is a partial sectional view showing still another modified example of the rotation preventing plate;
Fig. 11 is a cross-sectional view showing a modified example of a first embodiment;
Fig. 12 is a longitudinal sectional view of a main portion of a steering column device showing a second embodiment of the present invention;
Fig. 13 is a longitudinal sectional view of a main portion of a steering column device showing a modification of the second embodiment of the present invention;
Fig. 14 is a longitudinal sectional view of a main portion of a steering column device showing a third embodiment of the present invention;
Fig. 15 is a cross-sectional view of line XV-XV of Fig. 14;
Fig. 16 is a longitudinal sectional view of a main portion of a steering column device showing a fourth embodiment of the present invention;
Fig. 17 is a cross-sectional view of line XVII-XVII of Fig. 16;
Fig. 18 is a cross-sectional view similar to Fig. 17 and showing a fifth embodiment of the present invention; and
Fig. 19 is a side view showing a conventional steering column device.

### DETAILED DESCRIPTION OF EXEMPLARY EMBODIMENTS OF THE INVENTION EMBODIMENTS

Embodiments of the present invention will be explained on the basis of the drawings.

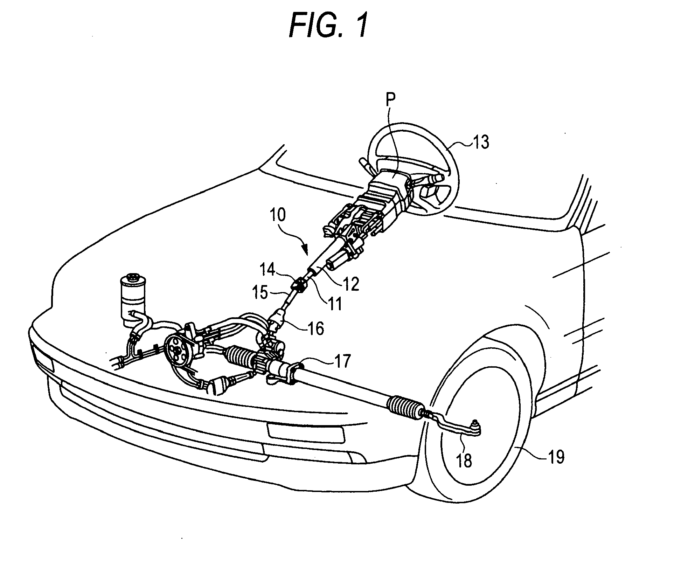

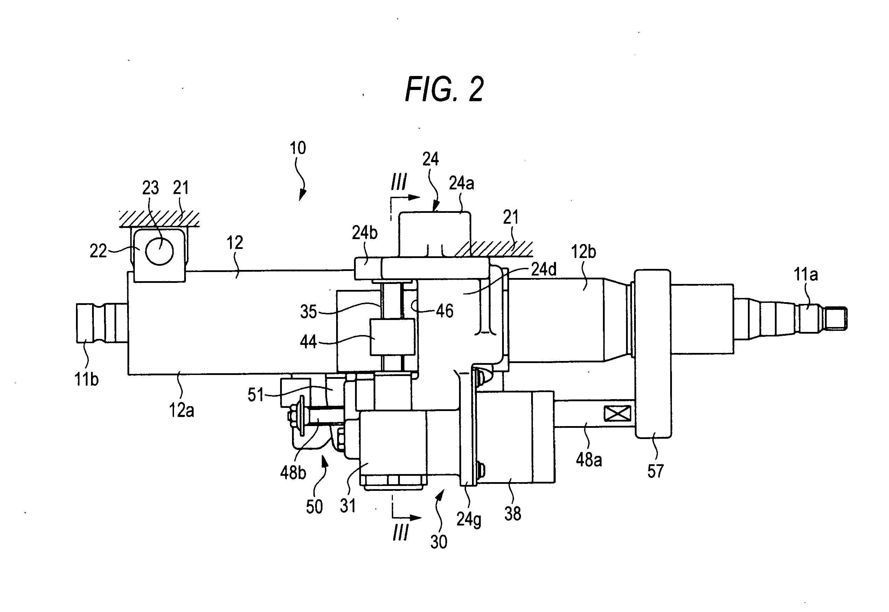

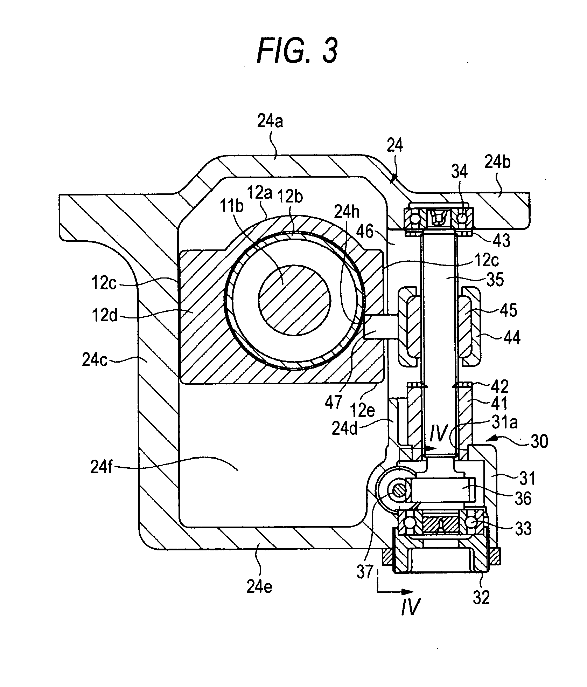

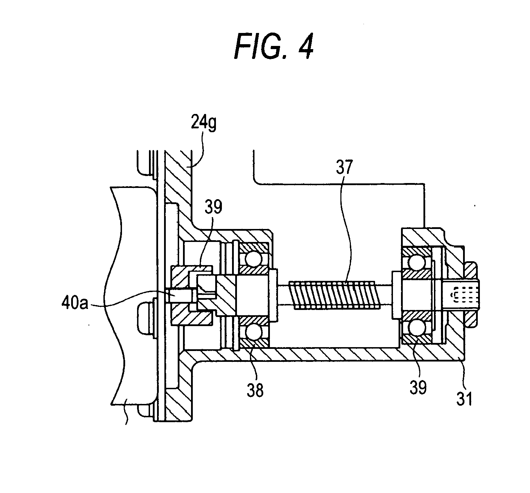

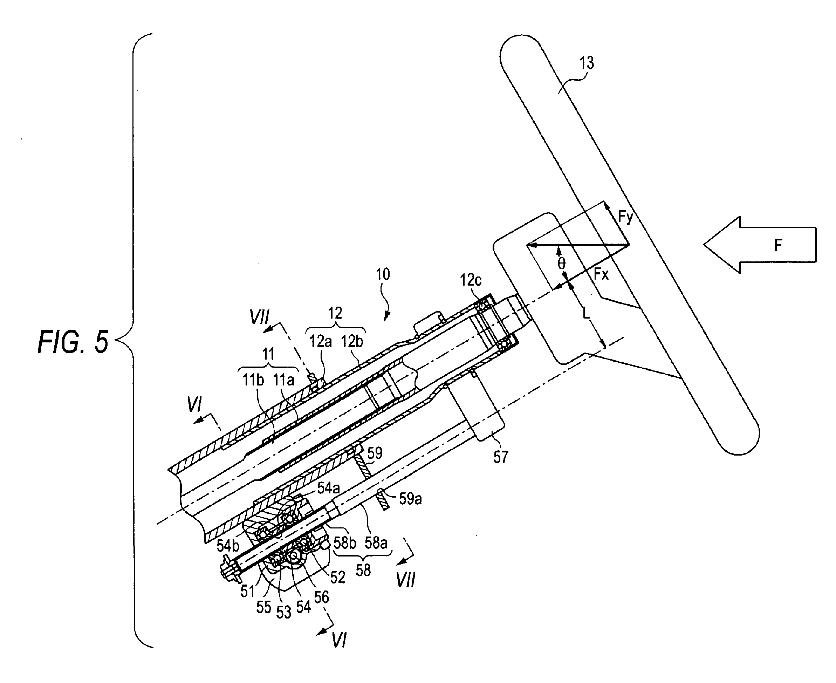

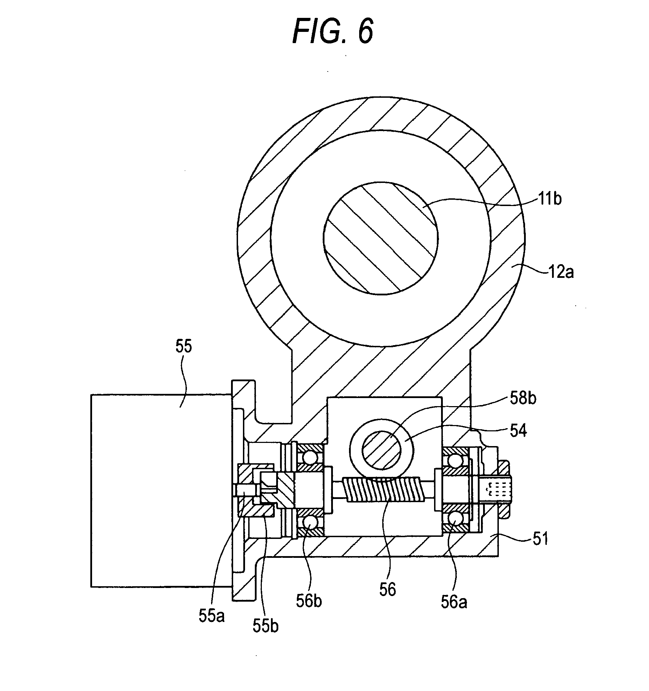

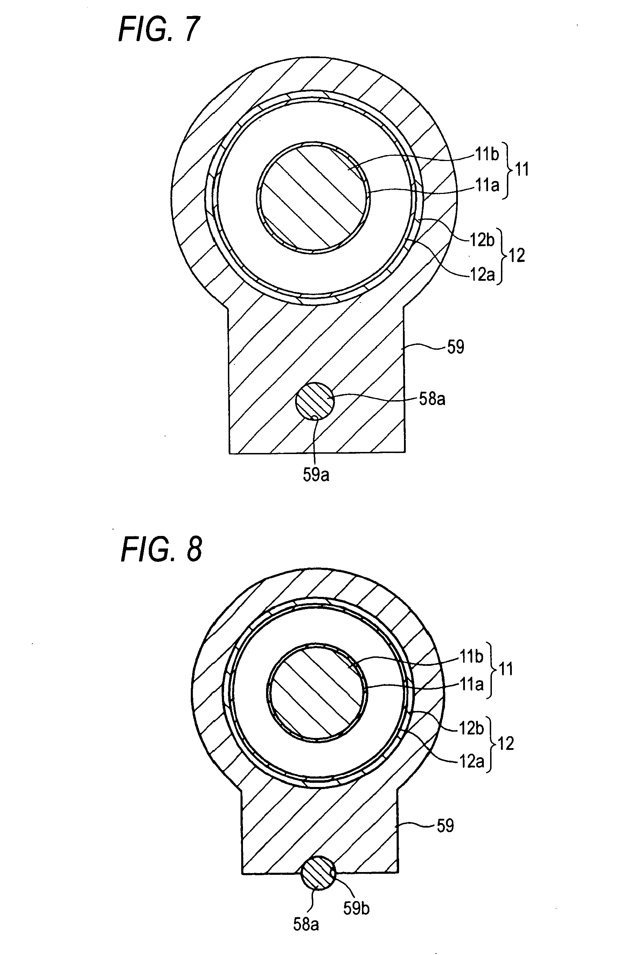

Fig. 1 is an entire constructional view showing a vehicle assembling a telescopic adjusting electric power steering apparatus in the present invention thereinto. Fig. 2 is an entire constructional view showing a first embodiment of the telescopic adjusting electric power steering apparatus in the present invention. Fig. 3 is a cross-sectional view of line III-III of Fig. 2. Fig. 4 is a cross-sectional view of line IV-IV of Fig. 3. Fig. 5 is a cross-sectional view of a main portion of the present invention. Fig. 6 is a cross-sectional view of line VI-VI of Fig. 5. Fig. 7 is a cross-sectional view of line VII-VII of Fig. 5.

In Fig. 1, a steering column device 10 has a steering column 12 for rotatably supporting a steering shaft 11. A steering wheel 13 is mounted to a rear end of the steering shaft 11. An intermediate shaft 15 is connected to a front end of the steering shaft 11 through a universal joint 14. A steering gear 17 constructed by a rack and pinion mechanism, etc. is connected to a front end of the intermediate shaft 15 through a universal joint 16. An output shaft of this steering gear 17 is connected to a steering road wheel 19 through a tie rod 18.

When a driver steers the steering wheel 13, its rotating force is transmitted to the steering gear 17 through the steering shaft 11, the universal joint 14, the intermediate shaft 15 and the universal joint 16. A rotational motion is converted into a linear motion of a vehicle width direction by the rack and pinion mechanism, and the steering road wheel 19 is rotated and steered through the tie rod 18.
A peripheral component P such as a control switch, a combination switch, a column cover, etc. for operating an tilt electric power steering mechanism 30 and an telescopic electric power steering mechanism 50 described later is arranged in a vehicle backward part of the steering column 12.

As shown in Fig. 5, the steering column device 10 is arranged slantingly by a predetermined angle θ upwardly in its rear portion with respect to the horizontal direction of the vehicle. In this steering column device 10, the steering shaft 11 is constructed by an outer shaft 11a attaching the steering wheel 13 thereto as shown in Fig. 5, and an inner shaft 11b spline-connected or serration-connected and slidably engaged with this outer shaft 11a.

Further, as shown in Figs. 2 and 5, the steering column 12 is constructed by an outer column 12a and an inner column 12b slidably supported in this outer column 12a. The outer shaft 11a and the inner shaft 11b of the steering shaft 11 are rotatably supported by a roller bearing 12c arranged on the inner circumferential face of a rear end portion of the inner column 12b, and an unillustrated roller bearing arranged on the inner circumferential face of a front end portion of the outer column 12a.

A rear end (a left-hand end in Fig. 2) of the universal joint 14 side of the outer column 12a is slidably supported in the vertical direction by a pivot pin 23 in a lower bracket 22 attached to a vehicle body side member 21. A front end (a right-hand end in Fig. 2) of the steering wheel 13 side of the outer column 12a is attached to the vehicle body side member 21, and is movably supported in the vertical direction in an upper bracket 24.

As shown in Fig. 3, this upper bracket 24 is formed in the shape of a square frame by an attaching plate portion 24b, guide plate portions 24c and 24d, and a bottom plate portion 24e. The attaching plate portion 24b has a swelling-out portion 24a in which a central portion attached to the vehicle body side member 21 is swelled out upward. The guide plate portions 24c and 24d are extended downward from left and right positions of the swelling-out portion 24a of this attaching plate portion 24b. The bottom plate portion 24e connects a portion between lower end portions of these guide plate portions 24c and 24d.
The outer column 12a is inserted into a guide space 24f surrounded by the attaching plate portion 24b, the guide plate portions 24c, 24d and the bottom plate portion 24e of the upper bracket 24. As can be clearly seen in Fig. 3, the outer column 12a has a projecting portion projected in the horizontal direction. Guide plate portions 12d, 12e having a perpendicular guide face 12c on which an end portion of this projecting portion is opposed in proximity to the guide plate portions 24c and 24d are formed.

The guide plate portion 12e is movably supported in the vertical direction by the tilt electric power steering mechanism 30. As shown in Fig. 3, the tilt electric power steering mechanism 30 has a screw shaft 35 extended in the vertical direction along the guide plate portion 24d and rotatably supported by a roller bearings 33, 34. The roller bearing 33 is fixedly arranged by a restraining member 32 within a gear housing 31 approximately formed in the shape of a square frame and integrally formed in a lower end portion of the guide plate portion 24d of the upper bracket 24. The roller bearing 34 is arranged on a lower face of the attaching plate portion 24b of the above upper bracket 24.

A worm wheel 36 is mounted to this screw shaft 35 in a position near the roller bearing 33 within the gear housing 31, and a worm 37 is engaged with this worm wheel 36. As shown in Fig. 4, this worm 37 is rotatably supported by roller bearings 38 and 39 arranged within the gear housing 31, and its one end is connected to an output shaft 40a of a motor 40 fixed to an attaching plate portion 24g formed in the guide plate portion 24d of the upper bracket 24 through a coupling 39.

Further, a cylindrical cover body 41 for covering the screw shaft 35 is arranged within an insertion hole 31a for inserting the screw shaft 35 of the gear housing 31. A damper 42 made of synthetic resin such as polyurethane, etc. having a large elastic property and which slide contacts with an outer circumferential face of the screw shaft 35 is arranged at the tip of this cylindrical cover body 41. Similarly, a damper 43, which slide contacts with the outer circumferential face of the screw shaft 35, is also arranged on a lower end face of the roller bearing 34.

A nut 45 supported in a nut holder 44 of a square shape in section is screwed between the dampers 42 and 43 of the screw shaft 35. This nut holder 44 is engaged with an interior of a guide groove 46 extending in the vertical direction and formed in the guide plate portion 24d of the upper bracket 24 so that a rotating movement around an axis in the screw shaft 35 of the nut holder 44 is regulated, and the nut holder 44 is moved in the vertical direction by normal and reverse rotations of the screw shaft 35. An engaging pin 47 projected and formed in this nut holder 44 is engaged with an elongated hole 24h extending in the axial direction of the outer column 12a and formed at the tip of the outer column 12a.
Accordingly, the screw shaft 35 is normally and reversely rotated and operated through the worm wheel 36 by normally and reversely rotating and operating the worm 37 by the motor 40. Thus, the nut holder 44 is vertically moved, and the outer column 12a is vertically swung with the pivot pin 23 as a center, and a tilt function can be achieved.
As shown in Fig. 5, the telescopic electric power steering mechanism 50 as an electric actuator is arranged between the outer column 12a and the inner column 12b of the steering column 12.

As shown in Fig. 5, this telescopic electric power steering mechanism 50 has a gear housing 51 fixed to the steering wheel 13 side of the outer column 12a of the steering column 12.
In this gear housing 51, a worm wheel 54 is rotatably supported by roller bearings 52 and 53 separated by a predetermined distance in the axial direction of the steering column 12 and oppositely arranged. This worm wheel 54 is formed in a cylindrical shape having a large diameter outer circumferential face of a central portion and a small diameter outer circumferential face to which the roller bearings 52 and 53 of both end sides nipping this large diameter outer circumferential face are externally fitted. A helical gear 54a is formed on the large diameter outer circumferential face, and a female screw 54b is formed on an inner circumferential face.

As shown in Fig. 6, a worm 56 connected to the output shaft of a motor 55 attached to the gear housing 51 is engaged with the helical gear 54a of the worm wheel 54. Here, the worm 56 is rotatably supported by roller bearings 56a and 56b arranged within the gear housing 51, and is connected to the output shaft 55a of the motor 55 through a coupling 55b. A speed reduction gear is constructed by these worm wheel 54 and worm 56. Further, a linear motion mechanism is constructed by a connecting rod 58 described later and the female screw portion 54b of the worm wheel 54.

On the other hand, a connecting plate 57 extending in the same direction of the gear housing 51 and spaced from an end face of the outer column 12a is attached in a position near the steering wheel 13 of the inner column 12b of the steering column 12. A connecting rod 58 is arranged between this connecting plate 57 and the gear housing 51.
This connecting rod 58 has a large diameter rod portion 58a fixed to a lower end of the connecting plate 57 of the steering wheel 13 side, and also has a male screw portion 58b having a diameter smaller than that of this large diameter rod portion 58a and screwed to the female screw portion 54b of the worm wheel 54 on an outer circumferential face.

In the connecting rod 58, its male screw portion 58b is screwed to the female screw portion 54b of the worm wheel 54 rotatably supported in the gear housing 51. The connecting rod 58 is arranged so as to be separated by a predetermined offset value L with respect to a central axis of the steering column 12 on a lower side of the steering column 12, and become parallel with the central axis.
Further, a rotation obstructing plate 59 as a rotation obstructing member is fixed to the vicinity of a steering wheel 13 side end portion of the outer column 12a. A lower end of this rotation obstructing plate 59 is extended until the lower side of the connecting rod 58, and an insertion hole 59a inserting the connecting rod 58 thereinto is formed in this extending portion as shown in Fig. 7.

Accordingly, the motor 55 is normally and reversely rotated, and the worm wheel 54 is normally and reversely rotated through the worm 56. Thus, the connecting rod 58 is advanced and retreated in the axial direction of the steering column 12. The inner column 12b is extended and contracted in the axial direction through the connecting plate 57, and a telescopic function is achieved.
Next, the operation of the above first embodiment will be explained.

Now, when a driver operates a control switch for a tilt mechanism arranged in the peripheral component P arranged in a vehicle backward part of the steering column 12 shown in Fig. 1 in a tilt-up direction (or a tilt-down direction) to make a tilt adjustment of the steering column 12 of the steering column device 10, for example, the motor 40 of the tilt electric power steering mechanism 30 is normally rotated (or reversely rotated).

In accordance with this, the nut 45 is moved in the upward direction (or downward direction) seen in Fig. 3 by reversely rotating (or normally rotating) the screw shaft 35 through the worm 37 and the worm wheel 36. Thus, since the engaging pin 47 formed in the nut holder 44 is engaged with the elongated hole 24h formed in the outer column 12a of the steering column 12, the outer column 12a is rotated upward (downward) with the pivot pin 23 as a center, and a tilt-up (or tilt-down) adjustment can be achieved.

Further, when the driver operates the control switch for the telescopic mechanism arranged in the peripheral component P arranged in the vehicle backward part of the steering column 12 shown in Fig. 1 in an extending direction (or a contracting direction) to make a telescopic adjustment of the steering column of the steering column device 10, for example, the motor 55 of the telescopic electric power steering mechanism 50 is normally rotated (or reversely rotated).
Thus, the worm wheel 54 is normally rotated (or reversely rotated) through the worm 56. Thus, the connecting rod 58 is moved to the steering wheel 13 side (or the side opposed to the steering wheel 13).

Therefore, the inner column 12b is pulled out of the outer column 12a (or the inner column 12b is inserted into the outer column 12a) through the connecting plate 57 fixed to the large diameter rod portion 58a of the connecting rod 58, and the steering column 12 is extended (or contracted) and the telescopic adjustment can be achieved.
At this time, the outer shaft 11a of the steering shaft 11 is moved with respect to the inner shaft 11b in accordance with the movement of the inner column 12b.

Thus, when the telescopic adjustment of the steering column 12 is achieved by the telescopic electric power steering mechanism 50, and rotating force for relatively rotating both the outer column 12a and the inner column 12b is applied between the outer column 12a and the inner column 12b constituting the steering column 12, the outer column 12a and the inner column 12b are intended to be relatively rotated. However, an end portion of the large diameter rod portion 58a of the connecting rod 58 is fixed to the connecting plate 57 fixed to an outer circumferential face of the inner column 12b, and the male screw portion 58b side of this large diameter rod portion 58a is inserted into the insertion hole 59a of the rotation obstructing plate 59 fixed to the outer circumferential face of the outer column 12a. Accordingly, even when the outer column 12a and the inner column 12b are intended to be relatively rotated, both the outer column 12a and the inner column 12b are connected through the connecting plate 57, the large diameter rod portion 58a of the connecting rod 58, and the rotation obstructing plate 59. Accordingly, a relative rotation obstructing function is achieved by the connecting plate 57, the large diameter rod portion 58a of the connecting rod 58, and the rotation obstructing plate 59. Thus, the relative rotation of the outer column 12a and the inner column 12b can be reliably obstructed.

Thus, since the relative rotation of the outer column 12a and the inner column 12b is obstructed, no torsion force due to relative rotating force is applied to the male screw portion 58b of the connecting rod 58, the worm wheel 54 and the worm 56 constituting a linear motion mechanism of the telescopic electric power steering mechanism 50 as an electric actuator. Further, an engaging state of the worm wheel 54 and the worm 56 can be preferably maintained, and the increase of the load of the motor 55 is surely obstructed.

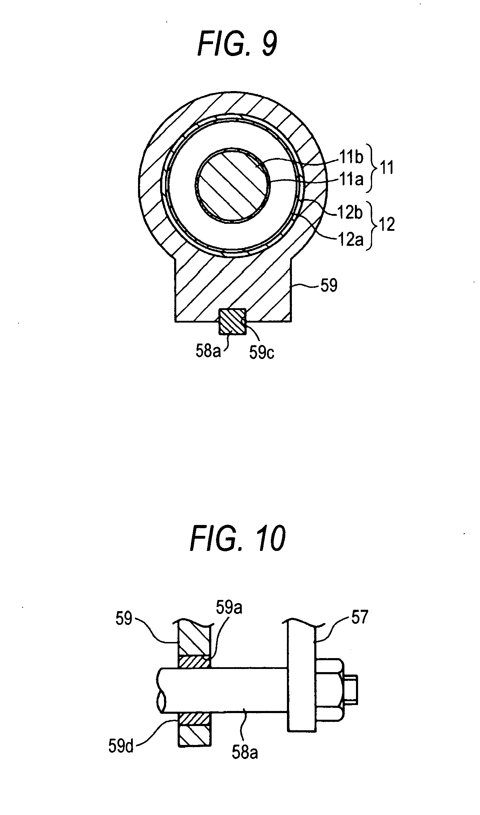

In the above first embodiment, the case for forming the insertion hole 59a for inserting the large diameter rod portion 58a of the connecting rod 58 into the rotation obstructing plate 59 has been explained. However, the present invention is not limited to this case. As shown in Fig. 8, an engaging concave portion 59b engaged with the large diameter rod portion 58a of the connecting rod 58 from the upward side may be also formed instead of the insertion hole 59a. Further, as shown in Fig. 9, the large diameter rod portion 58a of the connecting rod 58 may be also formed in a square shape in section, and an engaging concave portion 59c engaged with this large diameter rod portion 58a from the upward side may be also formed. In short, it is sufficient that a side wall engaged with both left and right side portions of the large diameter rod portion 58a of the connecting rod 58 and able to obstruct the relative rotation of the outer column 12a and the inner column 12b is formed in the rotation obstructing plate 59.

Further, in the above embodiment, the case for forming the insertion hole 59a in the rotation obstructing plate 59 has been explained. However, the present invention is not limited to this case. As shown in Fig. 10, for example, a sleeve 59d of low frictional resistance made of synthetic resin may be also mounted to an inner circumferential face which contacts with the large diameter rod portion 58a of the connecting rod 58 of the insertion hole 59a, and a bush coated with a coating material of a low frictional coefficient may be also applied to the inner circumferential face. In this case, a more smooth sliding movement can be secured without obstructing the sliding movement of the large diameter rod portion 58a of the connecting rod 58 by the sleeve 59d or the bush.

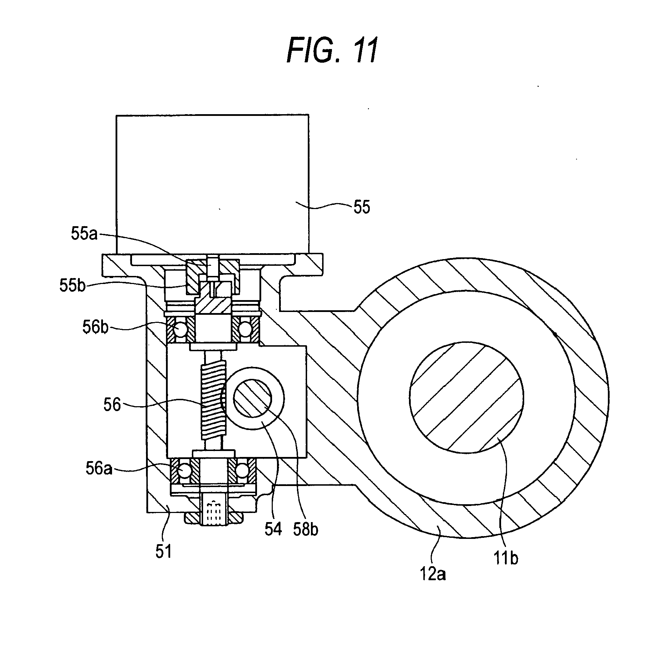

Further, in the above first embodiment, the case for arranging the telescopic electric power steering mechanism 50 on the lower side of the steering column device 10 has been explained. However, the present invention is not limited to this case. As shown in Fig. 11 showing a cross-sectional view of the steering column device, operations and effects similar to those of the above first embodiment can be also obtained when the telescopic electric power steering mechanism 50 is arranged on a side face side of the steering column device 10. An arranging position of the telescopic electric power steering mechanism 50 can be arranged in an arbitrary position if this arranging position is the circumference of the steering column 12.

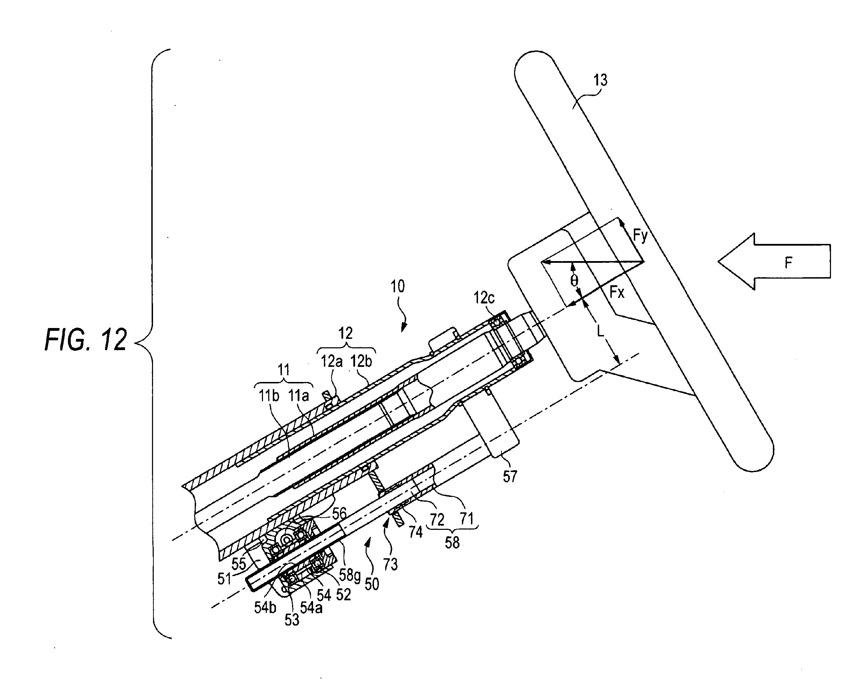

Next, a second embodiment of the present invention will be explained with respect to Fig. 12 showing a longitudinal sectional view of the steering column device.
In this second embodiment, a contracting portion 73 contracted at a transmitting time of impact load due to a secondary collision is formed in an intermediate portion of the connecting rod 58.
Namely, in the second embodiment, as shown in Fig. 12, the connecting rod 58 is constructed by an outer rod portion 71 of a sleeve shape, and an inner rod portion 72. In the outer rod portion 71, a vehicle backward side end portion is fixed to the connecting plate 57. The inner rod portion 72 is fitted and inserted into this outer rod portion 71 so as to be contracted. The inner rod portion 72 forms a male screw portion 58g in which a vehicle forward side end portion is screwed to the worm wheel 54. A part for fitting and inserting the inner rod portion 72 into the outer rod portion 71 constitutes the contracting portion 73.

A connection holding member 74 is arranged in this contracting portion 73. In this connection holding member 74, a thin leaf spring material shaped in a wavy shape repeating irregularities in the circumferential direction in section is formed in a ring shape. This connection holding member 74 contacts with both the outer rod portion 71 and the inner rod portion 72, and always obstructs contraction of the outer rod portion 71 and the inner rod portion 72. However, when a predetermined impact load or more is transmitted, the contraction of the outer rod portion 71 and the inner rod portion 72 is allowed. For example, collapse load for allowing a relative movement of the outer rod portion 71 and the inner rod portion 72 of this connection holding member 74 is set to about 2 kN or more.

In accordance with this second embodiment, at a normal time at which no impact load F is applied to the steering wheel 13, the outer rod portion 71 and the inner rod portion 72 are integrally connected by the connection holding member 74 in a state having no slip therebetween and are moved in the axial direction when the connecting rod 58 is moved in the axial direction through the worm 56 and the worm wheel 54 using a rotating operation of the motor 55. In accordance with this movement, the inner column 12b is moved in the axial direction through the connecting plate 57, and a telescopic operation can be performed.

However, a column axial component Fx of impact load F is applied to the inner column 12b of the steering column device 10 by applying impact load F to the steering wheel 13. This column axial component Fx is transmitted to the connecting rod 58 through the connecting plate 57. When this column axial component Fx becomes a predetermined collapse load or more, the relative contraction of the outer rod portion 71 and the inner rod portion 72 is allowed, and the connection holding member 74 is slid on the vehicle forward side while the connection holding member 74 elastically contacts with the outer rod portion 71 and the inner rod portion 72. Accordingly, impact energy can be reliably absorbed.

In the above second embodiment, the case for integrally forming the connecting plate 57 and the outer rod portion 71 has been explained. However, the present invention is not limited to this case, but the outer rod portion 71 may be also connected to the connecting plate 57 through a pivot pin. In this case, when impact load F is applied to the steering wheel 13, pivot connection is made between the connecting plate 57 and the outer rod portion 71 of the connecting rod 58. Accordingly, it is possible to restrain that bending moment M is applied to the connecting plate 57. Further, separating load due to the connection holding member 74 can be stabilized to a predetermined collapse load, and it is possible to accurately absorb impact energy at a contracting time between the outer rod portion 71 and the inner rod portion 72 of the connecting rod 58.

Further, in the above first and second embodiments, the case for fixing the outer column 12a of the steering column 12 to the vehicle body side member 21 has been explained. However, the present invention is not limited to this case, but the inner column 12b may be attached to the vehicle body side member 21 by a lower bracket 22 and an upper bracket 24, and the steering wheel 13 may be also attached to the outer column 12a.

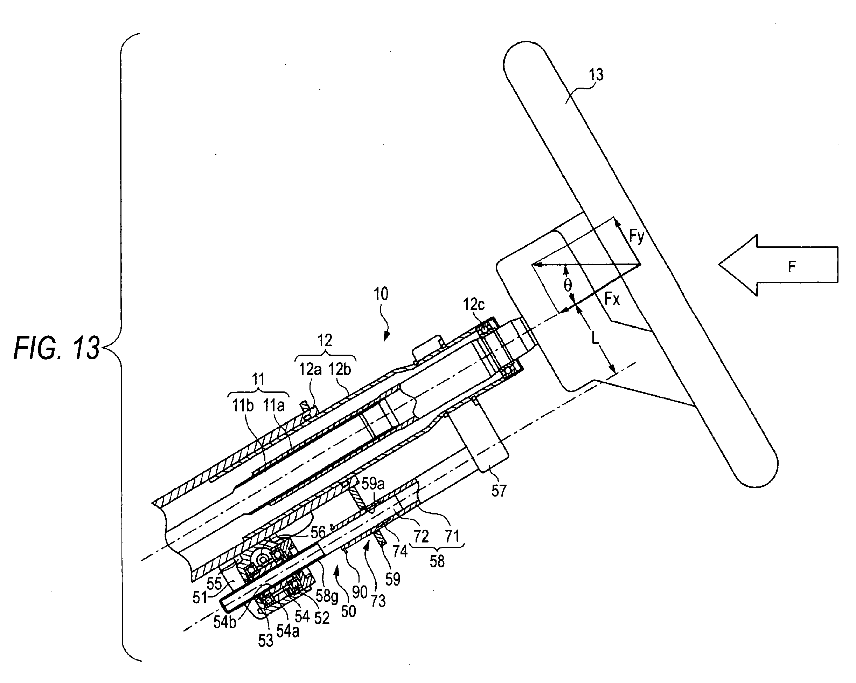

Further, it is adaptable to modify the second embodiment to a modified embodiment as shown in Fig. 13. According to the modified embodiment, a lower end portion of the outer rod portion 71 is protruded lower side from the rotation obstructing plate 59, and a C-ring 90 is fixed to the lower end portion of the outer rod portion 71. An outer diameter of the C-ring 90 is larger than an inner diameter of the through hole 59a.

According to this configuration, when the connection between the outer rod portion 71 and the inner rod portion 72 by the rotation obstructing plate 59 is released due to some reason at the time of normal state, since the C-ring 90 abuts with the rotation obstruction plate 59, the outer rod portion 71 is prevented from falling off from the rotation obstructing plate 59. Therefore, even though the connection between the outer rod portion 71 and the inner rod portion 72 by the rotation obstructing plate 59 is released due to some reason, the inner column 12b is prevented from falling off from the outer column 12a.

Note that distance between a position where the C-ring 90 is provided and a position of the rotation obstructing plate 59 corresponds to a telescopic adjustable distance, therefore the distance is set to be predetermined length. Further, in order to improve the strength of a connection portion between the inner rod portion 71 and the outer rod portion 72, it is preferable that an upper end portion of the inner rod portion 72 is positioned an upper side relative to the rotation obstructing plate 59.

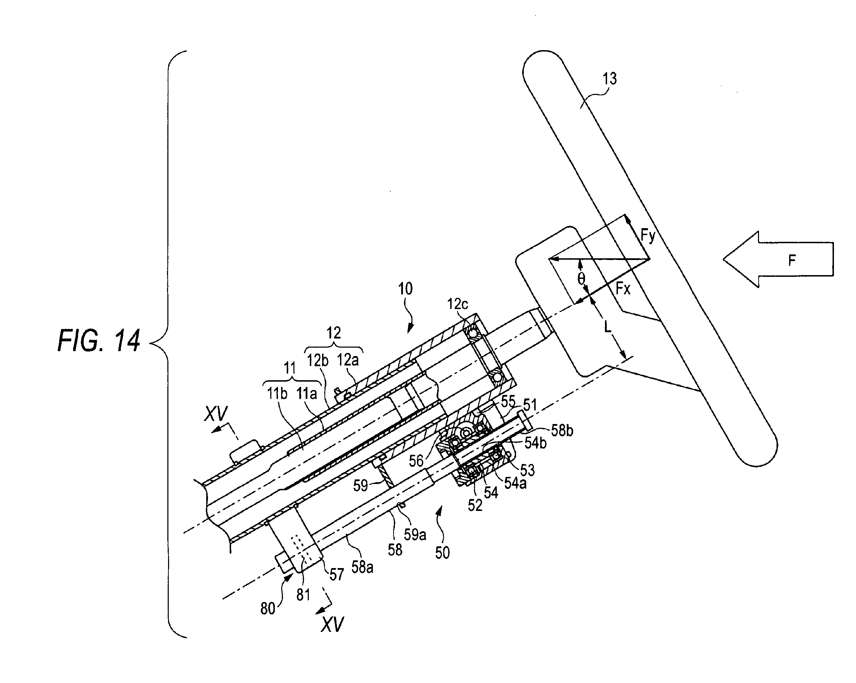

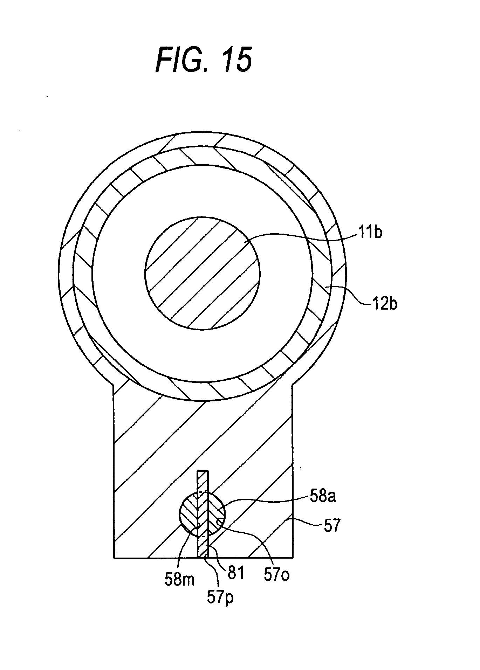

Next, a third embodiment of the present invention will be explained with respect to Fig. 14 showing a longitudinal sectional view of the steering column device and Fig. 15 showing a cross-sectional view on line XV-XV of Fig. 14.
In this third embodiment, the outer column 12a and the inner column 12b of the steering column device 10 are exchanged, and a contracting portion is formed between the connecting plate 57 and the connecting rod 58. Further, a resin pin is press-fitted into this contracting portion and is broken when column axial component Fx is the collapse load or more.

Namely, in the third embodiment, as shown in Fig. 14, the outer column 12a of the steering column 12 is arranged on the steering wheel 13 side, and the outer column 12a is slidably arranged with respect to this inner column 12b.
As shown in Fig. 14, the telescopic electric power steering mechanism 50 as an electric actuator is arranged between the outer column 12a and the inner column 12b.

Similar to the above first embodiment, this telescopic electric power steering mechanism 50 has a gear housing 51 fixed to the outer column 12a, and a worm wheel 54 and a worm 56 are arranged within this gear housing 51. The worm wheel 54 is rotatably supported by roller bearings 52 and 53. The worm 56 is engaged with this worm wheel 54, and is rotated and operated by the motor 55.

A male screw 58b formed in one end portion of the connecting rod 58 is screwed to a female screw 54b formed on the inner circumferential face of the worm wheel 54. A large diameter rod portion 58a formed in the other end portion of the connecting rod 58 is inserted into an insertion hole 57o formed in the connecting plate 57 of a flat plate shape fixed so as not to be moved in the axial direction with respect to the inner column 12b so that a contracting portion 80 is formed.

Further, the large diameter rod portion 58a of the connecting rod 58 is inserted into the insertion hole 59a of the rotation obstructing plate 59 fixed to a front end face of the outer column 12a.
As shown in Fig. 15, a fitting hole 57p passing the insertion hole 57o from a lower face side of the connecting plate 57 and extending upward is formed in the connecting plate 57. A fitting hole 58m communicated with the fitting hole 57p is formed in the large diameter rod portion 58a of the connecting rod 58 corresponding to this fitting hole 57p. A synthetic resin pin 81 broken at a predetermined collapse load is fitted into both the fitting holes 57p and 58m.

In accordance with this third embodiment, the connecting plate 57 and the connecting rod 58 are connected by the synthetic resin pin 81 in a normal state in which no impact load F at a secondary colliding time is applied to the steering wheel 13. Accordingly, the connecting rod 58 is advanced and retreated by normally and reversely rotating and operating the motor 55 of the telescopic electric power steering mechanism 50. Thus, the outer column 12a is advanced and retreated with respect to the inner column 12b so that a telescopic position of the steering wheel 13 can be adjusted.

When impact load F at the secondary colliding time is applied to the steering wheel 13 from this normal state as shown in Fig. 14, column axial component Fx of this impact load F is transmitted to the connecting rod 58 through the outer column 12a and the telescopic electric power steering mechanism 50. At this time, when column axial component Fx transmitted between the connecting rod 58 and the connecting plate 57 becomes a predetermined collapse load set by the synthetic resin pin 81 or more, the synthetic resin pin 81 is broken and the movement of the connecting rod 58 onto the vehicle forward side is allowed.

In this third embodiment, the rotation obstructing plate 59 is also arranged and the large diameter rod portion 58a of the connecting rod 58 is inserted into the insertion hole 59a of the rotation obstructing plate 59. Accordingly, the relative rotation of the outer column 12a and the inner column 12b can be reliably obstructed by the connecting plate 57, the large diameter rod portion 58a of the connecting rod 58 and the rotation obstructing plate 59, and torsion of the connecting rod 58 can be prevented. Accordingly, it is possible to reliably prevent that the load of the motor 55 of the telescopic electric power steering mechanism 50 is increased.

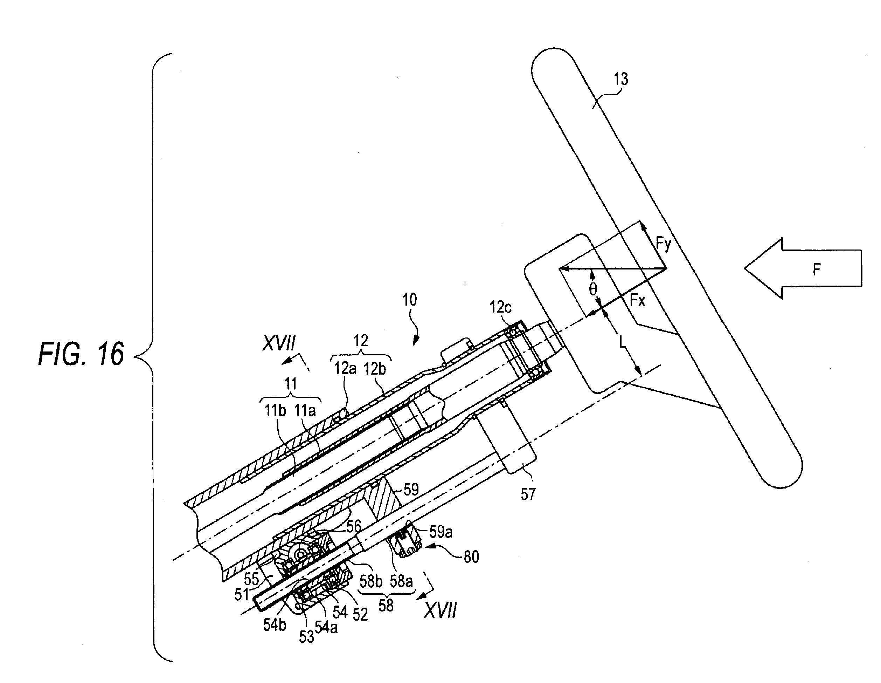

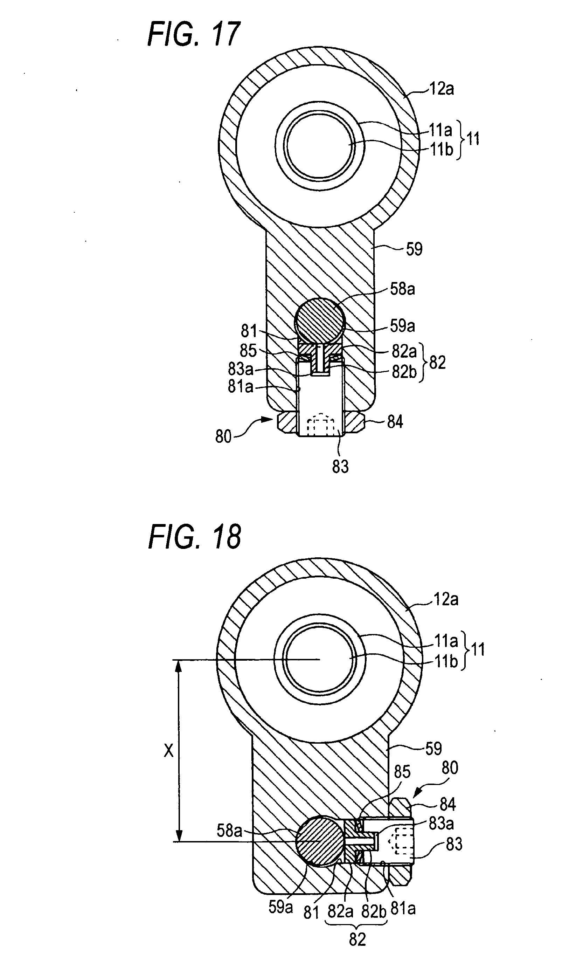

In the above first to third embodiments, the case for fixing the rotation obstructing plate 59 to the outer column 12a has been explained. However, the present invention is not limited to this case, but the rotation obstructing plate 59 may be also monolithically molded with the outer column 12a.
Next, a fourth embodiment of the present invention will be explained with respect to Fig. 16 showing a longitudinal sectional view of the steering column device and Fig. 17 showing a cross-sectional view on line XVII-XVII of Fig. 16.

Namely, as shown in Fig. 16, the fourth embodiment has a construction similar to that of the above first embodiment except that the rotation obstructing plate 59 is monolithically formed with the outer column 12a, and a backlash restraining mechanism 80 is formed in this rotation obstructing plate 59 as shown in Fig. 17. Portions corresponding to those of Fig. 5 are designated by the same reference numerals, and their detailed explanations are omitted.
Here, as shown in Fig. 17, an insertion hole 81 is formed in the backlash restraining mechanism 80. The insertion hole 81 is directed upward from the lower side of the rotation obstructing plate 59, and reaches the insertion hole 59a along a plane passing a column center line of the rotation obstructing plate 59 and a center line of the connecting rod 58.

A pressing block 82 is inserted into this insertion hole 81. The pressing block 82 contacts with the outer circumferential face of the connecting rod 58, and is formed in a T-shape in section by a disk portion 82a having a through hole in its central portion and a cylindrical portion 82b projected downward from a lower face central portion of this disk portion 82a. The pressing block 82 is supported within a guide concave portion 83a formed at the upper end of a male screw 83 screwed to a female screw 81a formed in the insertion hole 81 such that the pressing block 82 can be vertically moved. A lock nut 84 is screwed to an end portion projected downward from the rotation obstructing plate 59 of this male screw 83. Further, a disc spring 85 is inserted between an upper end face of the male screw 83 and a rear face of the disk portion 82a of the pressing block 82.
The connecting rod 58 is biased by this disc spring 85 on the upper face side of the insertion hole 59a through the pressing block 82.

In accordance with this fourth embodiment, in a state in which the large diameter portion 58a of the connecting rod 58 is inserted into the insertion hole 59a of the rotation obstructing plate 59, the male screw 83 holding the pressing block 82 through the disc spring 85 is screwed to the female screw 81a formed in the insertion hole 81, and is pushed into the insertion hole 59a. Thus, the large diameter portion 58a of the connecting rod 58 is displaced by biasing force using the disc spring 85 in the pressing block 82, and the large diameter portion 58a can contact with the upper face side of the insertion hole 59a. Therefore, radial backlash of the large diameter portion 58a of the connecting rod 58 and the insertion hole 59a can be reliably restrained.

Furthermore, since the backlash restraining mechanism 80 is arranged in the vertical direction of a direction axially perpendicular to the connecting rod 58, the width of left and right directions of the rotation obstructing plate 59 can be narrowed.
Next, a fifth embodiment of the present invention will be explained with respect to Fig. 18 as a cross-sectional view similar to Fig. 17.
Namely, as shown in Fig. 18, this fifth embodiment has a construction similar to that of the fourth embodiment except that the backlash restraining mechanism 80 formed in the rotation obstructing plate 59 is arranged in the horizontal direction, i.e., a direction perpendicular to a plane passing the column center line and the connecting rod center line instead of the arrangement in the perpendicular direction. Portions corresponding to those of Fig. 17 are designated by the same reference numerals, and their detailed explanations are omitted.

In accordance with this fifth embodiment, since the backlash restraining mechanism 80 is arranged in the horizontal direction, the male screw 83 is screwed to the female screw 81a of the insertion hole 81 and is pushed into the insertion hole 81 so that the large diameter portion 58a of the connecting rod 58 is biased in the horizontal direction by the pressing block 82 through the disc spring 85. Accordingly, the large diameter portion 58a of the connecting rod 58 attains a state contacting with e.g., a left-hand side portion of the insertion hole 59a. Thus, the backlash between the large diameter portion 58a of the connecting rod 58 and the insertion hole 59a can be reliably restrained.

At this time, since the large diameter portion 58a of the connecting rod 58 is displaced in the horizontal direction, no core-to-core distance X between the column center line and the center line of the connecting rod 58 is changed before and after this displacement, and an increase of operation friction can be reliably restrained.
In this connection, when the backlash restraining mechanism 80 is arranged in the perpendicular direction as in the above fourth embodiment, the connecting rod 58 is displaced toward the steering column 12. Accordingly, the core-to-core distance X between the column center line and the center line of the connecting rod 58 is changed before and after the displacement of the connecting rod. Therefore, there is a possibility that the operation friction is increased and exerts an unpreferable influence. However, when the backlash restraining mechanism 80 is arranged in the horizontal direction as in the fifth embodiment, the core-to-core distance X is not changed as mentioned above and the increase of the operation friction can be restrained.

In the above fourth and fifth embodiments, the case for monolithically molding the rotation obstructing plate 59 with the outer column 12a has been explained. However, the present invention is not limited to this case, but the rotation obstructing plate 59 may be also constructed separately from the outer column 12a as in the above first to third embodiments.
Further, in the fourth and fifth embodiments, the case for arranging the backlash restraining mechanism 80 in the rotation obstructing plate 59 in the perpendicular direction and the horizontal direction has been explained. However, the present invention is not limited to this case, but the arranging direction of the backlash restraining mechanism 80 can be arbitrarily set.

Further, in the above first to fifth embodiments, the case for arranging the connecting rod 58 on the lower side of the steering column 12 has been explained.
However, the present invention is not limited to this case, but the connecting rod 58 can be arranged in an arbitrary direction on a circular circumference of the steering column 12 if the connecting rod 58 is parallel to the steering column 12.
Furthermore, in the above first to fifth embodiments, the case for arranging the contracting portion 73 in only the telescopic electric power steering mechanism 50 has been explained. However, the present invention is not limited to this case. A contracting portion contracted at an applying time of column axis perpendicular direction component Fy of impact load F at the secondary colliding time of a predetermined collapse load or more may be also formed between the nut holder 44 and the nut 45 of the tilt electric power steering mechanism 30.

Further, in the above first to third embodiments, the case for arranging the tilt electric power steering mechanism 30 has been explained. However, the present invention is not limited to this case, but the tilt electric power steering mechanism 30 may be omitted and only the telescopic electric power steering mechanism 50 may be also arranged.

While the invention has been described in connection with the exemplary embodiments, it will be obvious to those skilled in the art that various changes and modification may be made therein without departing from the present invention, and it is aimed, therefore, to cover in the appended claim all such changes and modifications as fall within the true spirit and scope of the present invention.

## Claims

1. A telescopic adjusting electric power steering apparatus comprising:
a steering shaft to which a steering wheel is attached;
a steering column which rotatably supports the steering shaft, and comprises an outer column and an inner column connected each other so as to be relatively extended and contracted; and
an electric actuator which extends and contracts the outer column and the inner column, wherein
one end of the electric actuator is attached to the outer column, and the other end of the electric actuator is attached to the inner column, and
the electric actuator comprises a rotation obstructing member that obstructs relative rotation between the outer column and the inner column.

2. The telescopic adjusting electric power steering apparatus according to claim 1, wherein the electric actuator comprises:
a connecting plate fixed to one of the outer column and the inner column; and
a linear motion mechanism that converts a rotational motion into a linear motion and fixed to the other of the outer column and the inner column, wherein
the linear motion mechanism comprises a rod of which one end is supported in the connecting plate, and
the rotation obstructing member comprises a rotation obstructing plate that is engaged with the rod and is fixed to the other of the outer column and the inner column.

3. The telescopic adjusting electric power steering apparatus according to claim 2, wherein
the rotation obstructing plate comprises a backlash restraining mechanism that restrains a radial backlash generated between the rotation obstructing plate and the rod, and
the backlash restraining mechanism is provided in an engaging portion which engages with the rod.

4. The telescopic adjusting electric power steering apparatus according to claim 3, wherein
the backlash restraining mechanism is arranged in the rotation obstructing plate in a direction perpendicular to a plane passing a column center line and a connecting rod center line.

5. The telescopic adjusting electric power steering apparatus according to claim 1, wherein
the motor drives the rod so as to be advanced and retreated in an axial direction,
a contracting portion, which is capable of being contracted when impact load is transmitted, is formed between a free end of the rod and the connecting plate fixed to one of the inner column and the outer column, and
the rotation obstructing plate is engaged with an outer circumferential face of the contracting portion.

6. The telescopic adjusting electric power steering apparatus according to claim 2, wherein
a lower end of the rod supported by the connecting plate is protruded lower side from the rotation obstructing member,
a C-ring is fixed to the lower end of the rod, and
the C-ring abuts with the rotation obstructing member so as to prevent the rod from failing off from the rotation obstructing plate.
